# EUROPÄISCHE PATENTSCHRIFT

(11) **EP 1 401 951 B1**
(45) Veröffentlichungstag und Bekanntmachung des Hinweises auf die Patenterteilung: **28.12.2011**
(21) Anmeldenummer: 02743140.2
(22) Anmeldetag: 03.06.2002
(51) Int. Cl.: C08K 3/00, C08L 21/00, C08L 9/06, C08K 3/36

(54) **KIESELSÄURE-, RUSS- UND KAUTSCHUKGEL ENTHALTENDE KAUTSCHUKMISCHUNGEN**
RUBBER MIXTURES CONTAINING SILICIC ACID, SOOT AND RUBBER GEL
MELANGES DE CAOUTCHOUC CONTENANT DE L'ACIDE SILIQUE, DU NOIR DE CARBONE ET DU GEL DE CAOUTCHOUC

(30) Priorität: 15.06.2001 DE 10129058
(43) Veröffentlichungstag der Anmeldung: 31.03.2004
(73) Patentinhaber: LANXESS Deutschland GmbH, 51369 Leverkusen (DE)
(72) Erfinder: OBRECHT, Werner, 47447 Moers (DE); SUMNER, Anthony, James, Morgan, 51061 Köln (DE)
(86) Internationale Anmeldenummer: PCT/EP2002/006033
(87) Internationale Veröffentlichungsnummer: WO 2002/102890

(56) Entgegenhaltungen:
- EP-A- 0 947 548
- DE-A- 19 834 803
- US-A- 5 227 425
- US-A- 6 127 488

## Beschreibung

Die Erfindung betrifft Ruß-, Kieselsäure- und Kautschukgel enthaltende Kautschukmischungen auf Basis von Lösungs-Styrol/Butadienkautschuken. Die erfindungsgemäßen Kautschukmischungen, bei denen ein Teil der Kieselsäure bzw. des Rußes durch Kautschukgel ersetzt wurde, zeichnen sich durch ein verbessertes Dämpfungsverhalten bei 0°C (Nassrutschfestigkeit) sowie einen verbesserten Rollwiderstand (verbessertes Dämpfungsverhalten bei 60°C) aus, ohne dass andere wichtige mechanische Eigenschaften, wie der Abriebwiderstand, bei den aus den erfindungsgemäßen Kautschukmischungen hergestellten Vulkanisaten beeinträchtigt werden. Darüber hinaus bleibt das Verarbeitungsverhalten der unvulkanisierten Mischungen praktisch unbeeinträchtigt, wie die relevanten Kenngrößen (Compoundviskosität und Mooneyrelaxation) der Mischungen zeigen.

Die erfindungsgemäßen Kautschukmischungen dienen insbesondere zur Herstellung von Reifenbauteilen aller Art sowie zur Herstellung von technischen Gummiartikeln.

Die Herstellung von Reifen bzw. Reifenbauteilen wie Reifenlaufflächen, auf Basis von Kieselsäure und rußgefüllten Lösungs-Styrol/Butadienkautschuken (L-SBR), Polybutadienkautschuken (BR) und Polyisoprenkautschuken (IR und NR) mit einem Anteil an L-SBR, der größer ist als der Anteil der anderen genannten Kautschuke, ist bekannt. Die aus solchen Mischungen hergestellten Vulkanisate zeichnen sich insbesondere durch eine vorteilhafte Kombination von Nassrutschfestigkeit, Rollwiderstand und Abriebwiderstand aus. Nachteile bei dem Einsatz solcher kieselsäuregefüllten Kautschukmischungen sind insbesondere die hohen Kosten von bestimmten, notwendigen Komponenten, wie den Füllstoffaktivatoren, sowie das hohe spezifische Gewicht der kieselsäuregefüllten Mischungen, verbunden mit einer energieaufwendigen Verarbeitbarkeit der Kautschukmischungen auf Grund der hohen Viskositäten und der hohen Mooneyrelaxation.

Es ist weiterhin bekannt, Kautschuk- bzw. Mikrogele als Füllstoffe in Kautschukmischungen einzusetzen. Verwiesen wird in diesem Zusammenhang insbesondere auf EP-A-405 216, US-A-5 395 891, US-A-6127488 und DE-A 19 701 487. Obwohl in den genannten Patentanmeldungen bzw. Patenten der Einsatz der verschiedensten Kautschukgele als Füllstoffe in verschiedenen Kautschukmischungen beschrieben wird, wird in den genannten Patentanmeldungen und Patenten nicht die Lehre vermittelt, dass durch den Einsatz von geringen Mengen an Kautschukgelen in L-SBR-Kautschukmischungen, die Kieselsäure und Ruß enthalten, ein verbessertes Dämpfungsverhalten bei 0°C (Nassrutschfestigkeit) sowie ein verbesserter Rollwiderstand (verbessertes Dämpfungsverhalten bei 60°C) verbunden mit einem geringen Abrieb ohne Verschlechterung des Verarbeitungsverhaltens der unvulkanisierten Kautschukmischungen erzielt werden kann.

Ziel der vorliegenden Erfindung war es daher, die genannten Eigenschaften von Kautschukmischungen auf Basis von L-SBR zu verbessern, verbunden mit einem guten Verarbeitungsverhalten der unvulkanisierten Kautschukmischungen.

Gegenstand der vorliegenden Erfindung sind daher Ruß-, Kieselsäure- und Kautschukgel enthaltende Kautschukmischungen, in denen die zuvor beschriebene Aufgabe gelöst wird.

Die erfindungsgemäßen Kautschukmischungen bestehen aus
a) Lösungs-Styrol/Butadienkautschuk (L-SBR), dadurch gekennzeichnet dass neben den L-SBR-Kautschuken Polybutadienkautschuk (BR) und Polyisoprenkautschuk (IR und NR) sowohl einzeln als auch in Kombination untereinander vorhanden sind. Dabei beträgt der Anteil des Polybutadienkautschuks, der Anteil des Polyisoprenkautschuks oder der Anteil eines Gemisches aus Polyisoprenkautschuk und Polybutadienkautschuk in der Mischung 1 bis 50 Gew.%, bevorzugt 5 bis 40 Gew.%, wobei bei Einsatz einer Mischung aus Polybutadienkautschuk und Polyisoprenkautschuk 5 bis 95 Gew.-% an Polybutadienkautschuk, bezogen auf die gesamte Menge der Mischung aus Polybutadienkautschuk und Polyisoprenkautschuk, vorhanden sind.
b) Kieselsäure,
c) Ruß und
d) Kautschukgel,
wobei die Komponente a) in einer Menge von 100 Gew.-Teilen, die Komponente b) in Mengen von 20 bis 120 Gew.-Teilen, die Komponente c) in Mengen von 5 bis 60 Gew.-Teilen und die Komponente d) in Mengen von 0,1 bis 10 Gew.-Teilen in der Mischung vorhanden sind, mit der Maßgabe, dass der Anteil der Komponente c) bezogen auf den Anteil der Komponente b) maximal 50 Gew.-% beträgt.

Bevorzugt ist die Komponente a) in der Mischung in einer Menge von 100 Gew.-Teilen, die Komponente b) in Mengen von 30 bis 100 Gew.-Teilen, die Komponente c) in Mengen von 10 bis 40 Gew.-Teilen und die Komponente d) in Mengen von 1,0 bis 5,0 Gew.-Teilen in der Mischung vorhanden. Der Anteil der Komponente c) bezogen auf den Anteil der Komponente b) in der Mischung beträgt bevorzugt 5 bis 30 %.

Als weitere Komponente (Komponente e)) können in den erfindungsgemäßen Kautschukmischungen noch Füllstoffaktivatoren auf Basis von Silicium-organischen Schwefelverbindungen in Mengen von 0,1 bis 15 Gew.-Teilen, bevorzugt 0,2 bis 10 Gew.-Teilen enthalten sein.

Darüber hinaus können die erfindungsgemäßen Kautschukmischungen noch die bekannten und üblichen Kautschukhilfsmittel und Additive sowie Vernetzungsmittel und Vulkanisationsbeschleuniger (Komponente g)) in Mengen von 0,05 bis 80 Gew.-Teilen, bevorzugt 0,1 bis 50 Gew.-Teilen, enthalten.

Als Lösungs-Styrol/Butadienkautschuke (L-SBR) werden in die erfindungsgemäße Kautschukmischungen solche eingesetzt, die in einem Lösungsprozess auf Basis von Vinylaromaten und konjugierten Dienen hergestellt werden. Solche L-SBR-Kautschuke sind bekannt und beispielsweise in der nachfolgenden Literatur näher beschrieben: H.L. Hsieh, R.P. Quirk, Marcel Dekker Inc. New York, Basel 1996; Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 239-364.

Zum Aufbau der L-SBR-Kautschuke kommen als vinylaromatische Monomere beispielsweise Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin in Frage. Bevorzugt wird Styrol eingesetzt. Der Gehalt an einpolymerisierten Vinylaromaten in den L-SBR-Kautschuken liegt im Bereich von etwa 5 bis 50 Gew.-%, bevorzugt 10 bis 40 Gew.-%.

Als konjugierte Diene kommen für den Aufbau der L-SBR-Kautschuke beispielsweise in Betracht: 1,3-Butadien, Isopren, 1,3-Pentadien, 2,3-Dimethylbutadien, 1-Phenyl-1,3-butadien und 1,3-Hexadien. Bevorzugt werden 1,3-Butadien und Isopren, insbesondere Butadien, eingesetzt. Der Gehalt an einpolymerisierten Dienen in den L-SBR-Kautschuken liegt im Bereich von etwa 50 bis 95 Gew.%, bevorzugt im Bereich von 60 bis 90 Gew.%. Der Gehalt an Vinylgruppen in den einpolymerisierten Dienen liegt im Bereich von 10 und 90 %, bevorzugt 20 bis 80 %, der Gehalt an 1,4-trans-ständigen Doppelbindungen liegt im Bereich von etwa 5 bis 80 %, bevorzugt 10 bis 70 %, und der Gehalt an 1,4-cis- ständigen Doppelbindungen ist komplementär zur Summe des Gehaltes an Vinylgruppen und 1,4-trans-ständigen Doppelbindungen.

Bei den erfindungsgemäß eingesetzten L-SBR-Kautschuken sind die einpolymerisierten Monomeren üblicherweise statistisch verteilt. Selbstverständlich können auch L-SBR-Kautschuke eingesetzt werden mit blockartig aufgebauter Struktur, die als Integralkautschuke bezeichnet werden und beispielsweise von K.-H. Nordsiek, K.-H. Kiepert in GAK Kautschuk Gummi Kunststoffe 33 (1980), Nr. 4, 251-255 beschrieben werden. Darüber hinaus können auch L-SBR-Kautschuke eingesetzt werden, die eine lineare oder verzweigte Struktur aufweisen oder die in bekannter Weise endgruppenmodifiziert sind. Solche Kautschuke sind beispielsweise beschrieben in FR-A 2 053 786 und in der Japanischen Patentanmeldung 56-104 906.

Die Herstellung der L-SBR-Kautschuke ist bekannt und erfolgt durch anionische Lösungspolymerisation mittels eines Katalysators auf Alkali- oder Erdalkalimetallbasis in einem inerten, organischen Lösungsmittel.

Die erfindungsgemäß einzusetzenden L-SBR-Kautschuke besitzen üblicherweise Molekulargewichte (Zahlenmittel) von 50.000 bis 1.000.000 g/Mol und Glasübergangstemperaturen von -80 bis +20°C (bestimmt durch Differentialthermoanalyse (DSC)).

Wie erwähnt, können neben den L-SBR-Kautschuken noch Polybutadien-Kautschuke in den erfindungsgemäßen Kautschukmischungen vorhanden sein. Die einzusetzenden Polybutadien-Kautschuke besitzen üblicherweise einen 1,4-cis-Gehalt von ≥85 %, bevorzugt ≥90 % und werden in bevorzugter Weise in Gegenwart von Ziegler/Natta-Katalysatoren auf Basis von Übergangsmetallen wie Titan, Nickel, Cobalt und Neodym hergestellt. Beschrieben sind solche Polybutadien-Kautschuke in: (Houben-Weyl, Methoden der Organischen Chemie, Thieme Verlag, Stuttgart, 1987, Band E 20, Seiten 114 bis 134; Ullmann's Encyclopedia of Industrial Chemistry, Vol A 23, Rubber 3. Synthetic, VCH Verlagsgesellschaft mbH, D-69451 Weinheim, 1993, S. 239-364).

Die erfindungsgemäß einzusetzenden Polybutadienkautschuke besitzen Molekulargewichte (Zahlenmittel) von 50.000 bis 1.000.000 g/Mol und Glasübergangstemperaturen von ≦ -100°C.

Als weitere Kautschuk-Komponente kann in den erfindungsgemäßen Kautschukmischungen Polyisoprenkautschuk eingesetzt werden, wobei unter Polyisoprenkautschuk sowohl synthetisch hergestelltes 1,4-cis-Polyisopren (IR) als auch Naturkautschuk (NR) zu verstehen ist. In den Polyisoprenkautschuken beträgt der 1,4-cis-Gehalt ≧ 80 %, bevorzugt ≥90 %.

Die IR-Kautschuke können in üblicher Weise mittels Lithium- als auch mit Hilfe von Ziegler/Natta-Katalysatoren hergestellt werden (siehe z.B. Houben-Weyl, Methoden der Organischen Chemie, Thieme Verlag, Stuttgart, 1987, Band E 20, Seiten 114 bis 134; Ullmann's Encyclopedia of Industrial Chemistry, Vol. A 23, Rubber 3. Synthetic, VCH Verlagsgesellschaft mbH, D-69451 Weinheim, 1993, S. 239-364). Vorzugsweise wird Naturkautschuk eingesetzt.

Die Polyisoprenkautschuke besitzen üblicherweise Molekulargewichte (Zahlenmittel) von 50 000 bis 1 000 000 g/Mol und einen cis-1,4-Gehalt > 80 %, vorzugsweise > 90 %.

Als Kieselsäuren können in den erfindungsgemäßen Kautschukmischungen alle bekannten Kieselsäuren eingesetzt werden, die auch bislang in Kautschukmischungen eingesetzt und verwendet werden. Beschrieben werden solche Kieselsäuren beispielsweise in Ullmann's Encyclopedia of Industrial Chemistry, VCH Verlagsgesellschaft mbH, D-69451 Weinheim, 1993, "Silica", S.635-645. Die Kieselsäuren können in pyrogener Weise als auch durch Fällungen aus wässrigen Lösungen hergestellt werden, wobei gefällte Kieselsäuren bevorzugt wird. Die erfindungsgemäßen Kieselsäuren besitzen eine spezifische Oberfläche von etwa 5 bis 1000 m²/g, vorzugsweise von 20 bis 400 m²/g. Die erfindungsgemäß einzusetzenden Kieselsäuren können gegebenenfalls auch als Mischoxide mit anderen Metalloxiden, wie Aluminium-, Magnesium-, Calcium-, Barium-, Zink-, Zirkonium-, Titan-Oxiden vorliegen. Der Anteil solcher Metalloxide in den Kieselsäuren beträgt dabei etwa 1 bis 25 Gew.-%.

Als Ruße können in den erfindungsgemäßen Kautschukmischungen wiederum alle hierfür bekannten Ruße eingesetzt werden, beispielsweise solche die in Ullmann's Encyclopedia of Industrial Chemistry, VCH Verlagsgesellschaft mbH, D-69451 Weinheim, 1993, vol A 5 "Carbon Black", S.95-158, beschrieben sind. Die einzusetzenden Ruße in bekannter Weise nach den gas black-, furnace black-, lamp black- und thermal black- Verfahren hergestellt und werden nach der neuen ASTM-Nomenklatur (ASTM D 1765 und D 2516) als: N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N642, N 650, N 660, N 683, N 754, N 762, N 765, N 772, N 774, N 787, N 907, N 908 N 990, N 991 bezeichnet. Die Ruße besitzen üblicherweise eine BET-Oberfläche von etwa 5 bis 200 m²/g, bevorzugt 50 bis 150 m²/g.

Als Kautschukgele, gelegentlich auch als Mikrogele oder Gele bezeichnet, werden Kautschukpartikel verstanden, die durch Vernetzung von Kautschuklatices hergestellt werden, wie beispielsweise in US-A-5395891 (BR-Gele), US-A-6127488 (SBR-Gele) und DE-A 19701487 (NBR-Gele) beschrieben wird. Selbstverständlich ist die Herstellung solcher Kautschukgele durch entsprechende Emulsionspolymerisation, d.h. ohne nachträglichen Vemetzungsschritt, möglich. Auch agglomerisierte Kautschukgele (EP-A 1 078 953) können eingesetzt werden.

Die erfindungsgemäß einzusetzenden Kautschukgele können auch durch Einbau von funktionellen Monomeren, die beispielsweise Hydroxyl-, Carboxyl-, Vinylpyridin-, Amino-, Dialkylamino-, Chlormethylphenyl- sowie Epoxy-Gruppen besitzen, modifiziert sein. Solche Kautschukgele sind z.B. beschrieben in DE-A-19 919 459, DE-A-19 834 803 und DE-A-19 834 802.

Die erfindungsgemäß einzusetzenden Kautschukgele besitzen Teilchendurchmesser von ca. 5 bis 1.000 nm, bevorzugt 20 bis 600 nm (DVN-Wert nach DIN 53206). Aufgrund ihrer Vernetzung sind sie unlöslich und in geeigneten Quellmitteln, wie Toluol, quellbar. Die Quellungsindizes der Kautschukgele (Qᵢ) in Toluol betragen 1 bis 15, vorzugsweise 1 bis 10. Der Quellungsindex wird aus dem Gewicht des lösungsmittelhaltigen Gels (nach Zentrifugation mit 20.000 Upm) und dem Gewicht des getrockneten Gels berechnet:
Qᵢ = Nassgewicht des Gels/Trockengewicht des Gels.

Zur Ermittlung des Quellungsindex lässt man 250 mg des Gels in 25 ml Toluol 24 Stunden unter Schütteln quellen. Das Gel wird dann abzentrifugiert und gewogen und anschließend bei 70°C bis zur Gewichtskonstanz getrocknet. Das getrocknete Gel wird nochmals gewogen. Aus dem Nassgewicht des Gels und dem Trockengewicht des Gels errechnet sich dann der Quellungsindex. Als Kautschukgele werden typischerweise solche eingesetzt auf Basis von Chloroprenkautschuk, Naturkautschuk, Polybutadienkautschuk, Nitrilkautschuk und Styrol-Butadienkautschuk. Wie bereits erwähnt können die Kautschukgele durch Einbau von entsprechenden funktionellen Monomeren modifiziert sein. Bei Einsatz von modifizierten Mikrogelen sind solche bevorzugt, die Hydroxylgruppen enthalten.

Wie bereits zuvor erwähnt, wird bei den erfindungsgemäßen Kautschukmischungen ein Teil der üblicherweise eingesetzten Kieselsäure durch die erwähnten Kautschukgele ersetzt. Dadurch ergeben sich die bevorzugten physikalischen Eigenschaften der Vulkanisate und die verbesserte Verarbeitbarkeit der von vulkanisierten Kautschukmischungen. Die erwähnten Mengen an einzusetzenden Kautschukgelen wurden in erster Nährung so kalkuliert, dass der Füllgrad der Kautschukvulkanisate volumenmäßig praktisch konstant gehalten wird. Aufgrund einer solchen Kalkulation unter Zugrundelegung einer üblichen Kieselsäuredichte von 2 g/cm³ und einer Kautschukgel-Dichte von 1g/cm³ ergibt sich so eine Substitution von 1 bis 20 Gew.-Teile der Kiesesläure durch 0,5 bis 10 Gew.-Teile an Kautschukgel.

Als einzusetzende Füllstoffaktivatoren kommen schwefelhaltigen Organosiliciumverbindungen der folgende Grundstrukturen in Betracht: 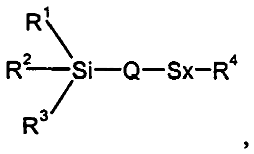 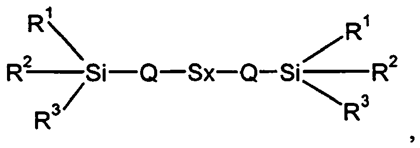 worin
- R¹, R² und R³: Alkoxygruppen mit 1 bis 10 Kohlenstoffatomen bedeuten,
- Q: eine Spacergruppe darstellt, auf der Basis von aliphatischen, hetero-aliphatischen, aromatischen oder heteroaromatischen Kohlenstoffketten mit 1 bis 20 Kohlenstoffatomen, bevorzugt 1 bis 10 Kohlenstoffatomen und 1 bis 3 Heteroatomen, wie Sauerstoff, Schwefel, Stickstoff,
- R⁴: einen Rest darstellt mit nachfolgenden Strukturen:

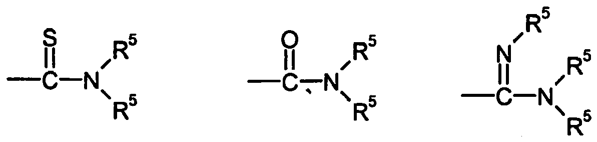

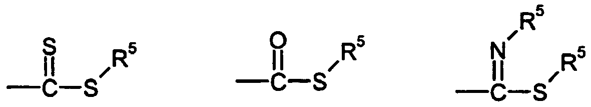

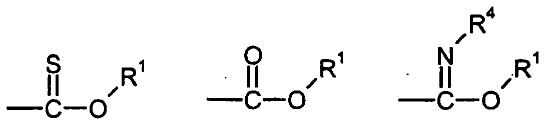

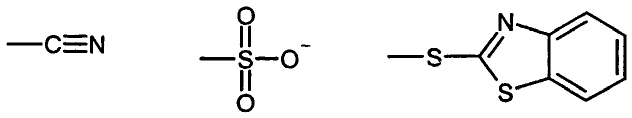

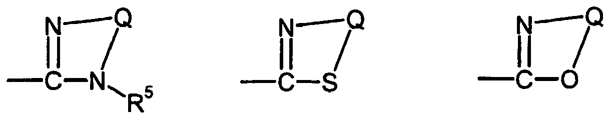

-N=C=O,

mit R⁵ für einen aliphatischen, heteroaliphatischen, cycloaliphatischen, aromatischen oder heteroaromatischen Rest mit 1 bis 20, bevorzugt 1 bis 10, Kohlenstoffatomen und 1 bis 3 Heteroatomen, wie Sauerstoff, Stickstoff oder Schwefel.

Bevorzugte schwefelhaltige Organosiliciumverbindungen sind Bis(tri-ethoxy-silyl-propyl-polysulfane) der folgenden Strukturformel: 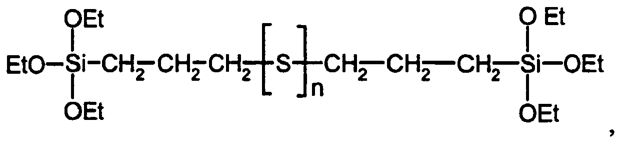 mit n = 2 bis 4. Solche Produkte sind kommerziell unter dem Namen Silan Si 75 (n = 2) und als Silan Si 69 (n = 4) der Fa. Degussa verfügbar.

Darüber hinaus können die erfindungsgemäßen Kautschukmischungen noch weitere Kautschukhilfsmittel und Additive enthalten, welche umfassen:
Alterungsschutzmittel, Reversionsschutzmittel, Lichtschutzmittel, Ozonschutzmittel, Verarbeitungshilfsmittel, Weichmacher, Tackifier, Treibmittel, Farbstoffe, Pigmente, Wachse, Harze, Streckmittel, organische Säuren, Verzögerer, Metalloxide, sowie Füllstoffaktivatoren, wie beispielsweise Triethanolamin, Polyethylenglykol, Hexantriol, oder anderen Mitteln, die der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Die erfindungsgemäßen Kautschukmischungen können darüber hinaus noch Vulkanisationsbeschleuniger sowie Vernetzungsmittel, wie Schwefel oder Schwefelspender, enthalten. Beispiele für geeignete Vulkanisationsbeschleuniger sind beispielsweise Mercaptobenzthiazole, Sulfenamide, Guanidine, Thiurame, Dithiocarbamate, Thioharnstoffe, Thiocarbonate sowie Dithiophosphate (siehe Ullmann's Encyclopedia of Industrial Chemistry, VCH Verlagsgesellschaft mbH, D-69451 Weinheim, 1993, vol A 23 "Chemicals and Additives", S. 366-417.)

Die Vulkansiationsbeschleuniger und Vernetzungsmittel werden üblicherweise in Mengen von 0,1 bis 20 Gewichtsteilen, bevorzugt 0,1 bis 15 Gewichtsteilen, bezogen auf die gesamte Menge an Kautschuk eingesetzt, wohingegen die zuvor beschriebenen Kautschukhilfsmittel und Additive in Mengen von 0,5 bis 50, bevorzugt 1 bis 30 Gew.-Teilen, bezogen auf die gesamte Menge eingesetzt werden.

Selbstverständlich können den erfindungsgemäßen Kautschukmischungen noch weitere Bestandteile zugemischt werden, wie unverkappte und verkappte, bevorzugt verkappte Bismercaptane der nachstehend allgemeinen Formeln

H-S-Q-S-H

oder

X-Su-Q-Sv-Y

wobei
- Q: eine Spacergruppe darstellt der zuvor erwähnten Art und wobei die Wasserstoffatome der unverkappten Mercaptane in geeigneter Weise durch die nachstehenden Substituenten X und Y ersetzt sein können: 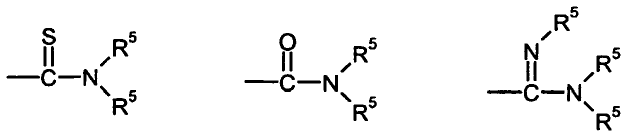 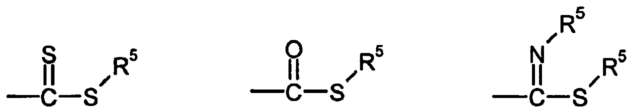 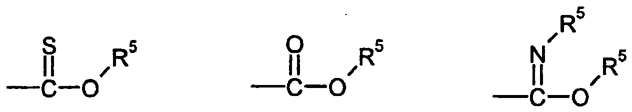 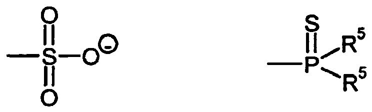 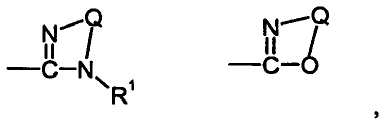
wobei
R⁵ und Q die zuvor beschriebenen Bedeutungen besitzen,
u und v Zahlen von 1 bis 6 bedeuten, wobei u = v = 2 bevorzugt ist.

Folgende verkappte Bismercaptane sind von besonderem Interesse: 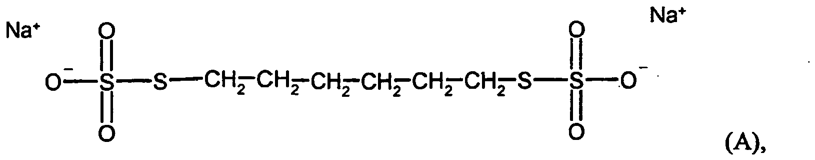 und 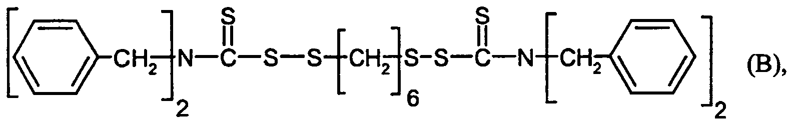 wobei Verbindung (B) von besonderem Interesse ist. Die Verbindung (B), 1,6-Bis-(N,N'-dibenzylthiocarbamoyldithio)-hexan, ist unter der Bezeichnung Vulcuren^{®}, VP KA 9188 (Bayer AG) im Handel erhältlich.

Die genannten Bis-Mercaptane können in die erfindungsgemäßen Mischungen in Gew.-Teilen von 0,1 bis 10, bevorzugt 0,2 bis 5, bezogen auf 100 Gew.-Teile der Komponente (a) eingesetzt werden.

Selbstverständlich ist es ebenfalls möglich, zu den genannten Füllstoffen Kieselsäure und Ruß weitere Füllstoffe den erfindungsgemäßen Mischungen zuzusetzen. Genannt werden z.B.:
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm,
- natürliche Silikate, wie Kaolin und andere natürlich vorkommende Kieselsäuren,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln),
- Thermoplaste (Polyamid, Polyester, Aramid, Polycarbonat sowie Cellulose und Stärke).

Die genannten Füllstoffe können in Mengen von 1 bis 20 Gew.-%, bevorzugt 1 bis 10 Gew.-%, bezogen auf die Gesamtmenge an eingesetzte Kieselsäure und Ruß, eingesetzt werden.

Die erfindungsgemäßen Kautschukmischungen werden durch Mischen der einzelnen Komponenten bei Temperaturen im Bereich von 130°C bis 180°C, bevorzugt bei 145°C bis 180°C, ohne den Zusatz von solchen Mitteln, die die Vulkanisation der Mischung initiieren können, hergestellt. Nachdem die Bestandteile bei der erhöhten Temperatur vermischt wurden, können der Mischung solche Mittel zugesetzt werden, die im Stande sind, die Vulkanisation zu initiieren. Zu nennen sind dabei vor allem Vernetzungsmittel, wie Schwefel und Schwefel enthaltende Verbindungen, sowie Vulkanisationsbeschleuniger der genannten Art. Die vernetzend wirkenden Mittel werden in dem zweiten Mischschritt bei einer Temperatur ≦ 100°C, vorzugsweise bei Temperaturen im Bereich von 30 bis 60°C, eingemischt.

Die Herstellung der erfindungsgemäßen Kautschukmischungen wird mit geeigneten Apparaturen vorgenommen, wie Mischwalzen, Innenmischer oder Mischextruder. Die Vulkanisation der erfindungsgemäßen Kautschukmischungen wird üblicherweise bei Temperaturen von etwa 100 bis 250°C, bevorzugt 130 bis 180°C, gegebenenfalls unter Druck bei 10 bis 200 bar, durchgeführt.

Die erfindungsgemäß hergestellten Kautschukmischungen dienen zur Herstellung von Reifen und Reifenbauteilen, insbesondere zur Herstellung von Reifenlaufflächen, Subtreads, Karkassen, Seitenwänden sowie Apexmischungen, darüber hinaus für die Herstellung von technischen Gummiartikeln, wie Dämpfungselementen, Walzenbelägen, Belägen von Förderbändern, Riemen, Dichtungen, Golfballkernen, Schuhsohlen. Bevorzugt werden die Mischungen für die Herstellung von Reifen und Reifenbauteilen eingesetzt.

### Vergleichsbeispiele

### Herstellung erfindungsgemäß einzusetzender Kautschukgele

Die Herstellung des Kautschukgels (BR-Gel/unmodifiziert) erfolgte wie in US-A-5 395 891 (Beispiel BR gel A1) beschrieben, wobei für die Vernetzung 2,5 phr Dicumylperoxid (DCP) eingesetzt wurden. Die Stabilisierung und Aufarbeitung des BR-Gels A erfolgte in Analogie zu Gel (2) gemäß DE-A-19 929 347.

Die Herstellung von Gel B erfolgte in Analogie zu der Herstellung von Gel (3) in DE-A-19 929 347, wobei für die Gelherstellung statt 1,0 phr Dicumylperoxid (DCP) 1,5 DCP eingesetzt wurden. Die Hydroxylmodifikation von Gel B erfolgte wie von Gel (2) gemäß der genannten DE-A, wobei für die Hydroxylmodifikation nicht 3 phr Hydroxyethylmethacrylat (HEMA) sondern 1 phr HEMA eingesetzt wurden. Die Stabilisierung und Aufarbeitung erfolgte wie oben beschrieben.

### Charakteristische Daten der eingesetzten Ausgangslatices und der hergestellten Kautschukgele

| Produkt-bezeichnung | Gel-typ | Styrol-gehalt [Gew.%] | DCP-Menge [phr] | Modifikation | | Durch-messer d₅₀ [nm] | Dichte [g/cm³] | Gel-gehalt [%] | QI | Tg [°C] |
|---|---|---|---|---|---|---|---|---|---|---|
| | | | | Monomer | Menge [phr] | | | | | |
| Ausgangslatex A | BR | - | - | - | - | 111 | 0,9003 | 92 | 15,8 | -83 |
| Gel A | BR | - | 2,5 | - | - | 110 | 0,9758 | 98 | 3,4 | -35 |
| Ausgangslatex B | SBR | 42 | - | - | - | 53 | 0,9673 | 3,8 | 26 | -32 |
| Gel B | SBR | 42 | 1,5 | - | - | 53 | 0,9958 | 91 | 5,8 | -6,5 |
| Mod.Gel B | SBR | 42 | 1,5 | HEMA | 1 | 49 | 1,0031 | 93 | 3,3 | +4,5 |

Auf der Basis o. g. Gele werden folgende Mischungen hergestellt und die Eigenschaften der entsprechenden Vulkanisate bestimmt:

### Mischungsserie A:

Folgende Bestandteile werden in der angegebenen Reihenfolge in einem Innenmischer bei 160°C gemischt (Mengenangaben in Gewichtsteilen)

| Mischungs-Nr.: | 1* | 2* | 3* | 4* | 5* | 6* | 7* | 8* |
|---|---|---|---|---|---|---|---|---|
| Buna VSL 5025¹⁾ | 103 | 103 | 103 | 103 | 103 | 103 | 103 | 103 |
| Buna CB 24²⁾ | 25 | 25 | 25 | 25 | 25 | 25 | 25 | 25 |
| Gel A (OBR 1049 B) | 0 | 1 | 3 | 5 | 10 | 20 | 30 | 40 |
| Renopal 450³⁾ | 12 | 12 | 12 | 12 | 12 | 12 | 12 | 12 |
| Vulkasil® S ⁴⁾ | 80 | 78 | 74 | 70 | 60 | 40 | 20 | 0 |
| Silan Si 69^{® 5)} | 6,4 | 6,4 | 6,4 | 6,4 | 6,4 | 6,4 | 6,4 | 6,4 |
| Stearinsäure | 1 | 1 | 1 | 1 | 1 | 1 | 1 | 1 |
| TMQ ⁶⁾ | 1 | 1 | 1 | 1 | 1 | 1 | 1 | 1 |
| 6PPD⁷⁾ | 1 | 1 | 1 | 1 | 1 | 1 | 1 | 1 |
| Ozonschutzwachs⁸⁾ | 1 | 1 | 1 | 1 | 1 | 1 | 1 | 1 |

| | | | | | | | | |
|---|---|---|---|---|---|---|---|---|
| * Vergleich | | | | | | | | |

Folgende Compoundbestandteile werden in die auf 50°C abgekühlte Mischung auf der Walze eingemischt:

| | | | | | | | | |
|---|---|---|---|---|---|---|---|---|
| Zinkoxid | 2,5 | 2,5 | 2,5 | 2,5 | 2,5 | 2,5 | 2,5 | 2,5 |
| Schwefel | 1,5 | 1,5 | 1,5 | 1,5 | 1,5 | 1,5 | 1,5 | 1,5 |
| CBS⁹⁾ | 1,7 | 1,7 | 1,7 | 1,7 | 1,7 | 1,7 | 1,7 | 1,7 |
| DPG ¹⁰⁾ | 2 | 2 | 2 | 2 | 2 | 2 | 2 | 2 |

| | | | | | | | | |
|---|---|---|---|---|---|---|---|---|
| ¹⁾ Ölverstreckter Lösungs-Styrol/Butadien-Kautschuk der Bayer AG mit 37,5 phr Mineralöl bez. auf 100 phr Festkautschuk (Vinylgehalt: 50 Gew.%; Styrolgehalt: 25 Gew.%) ²⁾ Neodym-Polybutadien (ölfrei) der Bayer AG ³⁾ Weichmacher der Fuchs Mineralölwerke ⁴⁾ Gefällte aktive Kieselsäure der Bayer AG ⁵⁾ Bis(tri-ethoxy-silyl-propyl) tetrasulfan (Si 69^{®} der Degussa AG) ⁶⁾ 2,2,4-Trimethyl-1,2-dihydrochinolin (polym.) Vulkanox® HS der Bayer AG ⁷⁾ N-1,3-Dimethylbutyl-N'-phenyl-p-phenylen-diamin (Vulkanox® 4020 der Bayer AG) ⁸⁾ Mischung von Paraffinen und Mikrowachsen (Antilux® 654 der Rheinchemie) ⁹⁾ Cyclohexylbenzthiazylsulfenamid (Vulkacit® CZ der Bayer AG) ¹⁰⁾ Diphenylguanidin (Vulkacit® D der Bayer AG) | | | | | | | | |

Zur Charakterisierung der Eigenschaften des unvernetzten Compounds werden die Mooneyviskosität ML 1+4 (100°C) und die Mooneyrelaxation (MR 30) herangezogen:

| Mischungs-Nr.: | 1* | 2* | 3* | 4* | 5* | 6* | 7* | 8* |
|---|---|---|---|---|---|---|---|---|
| ML 1 + 4 (100°C) [ME] | 111,3 | 109,7 | 106,7 | 98,3 | 87,5 | 63,0 | 48,6 | 30,4 |
| MR 30 [%] | 24,8 | 25,4 | 24,9 | 22,3 | 20,0 | 13,0 | 9,5 | 4,3 |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, Fₘₐₓ.-Fₐ., ts₁, t₅₀ und t₉₀ bestimmt.

| Mischungs-Nr.: | 1* | 2* | 3* | 4* | 5* | 6* | 7* | 8* |
|---|---|---|---|---|---|---|---|---|
| Fₐ [dNm] | 5,0 | 4,6 | 4,7 | 4,3 | 3,6 | 2,6 | 1,4 | 0,9 |
| Fₘₐₓ [dNm] | 25,8 | 25,0 | 23,4 | 22,0 | 19,4 | 15,4 | 10,4 | 7,5 |
| Fₘₐₓ - Fₐ [dNm] | 20,8 | 20,4 | 18,7 | 17,7 | 15,8 | 12,8 | 9,0 | 6,6 |
| ts₁ [min.] | 0,6 | 0,4 | 0,9 | 1,1 | 1,4 | 1,8 | 2,2 | 2,4 |
| t₅₀ [min.] | 3,7 | 3,9 | 4,0 | 4,0 | 3,7 | 3,2 | 3,1 | 3,5 |
| t₉₀ [min] | 10,7 | 10,4 | 10,1 | 9,7 | 8,7 | 9,4 | 9,5 | 8,0 |

Nach DIN 53 529, Teil 3 bedeuten:
- Fₐ:: Vulkameteranzeige im Minimum der Vernetzungsisotherme
- Fₘₐₓ:: Maximum der Vulkameteranzeige
- Fₘₐₓ - Fₐ:: Differenz der Vulkameteranzeigen zwischen Maximum und Minimum
- ts₁ :: Zeit, bei der die Vulkameteranzeige um 1 Nm gegenüber dem Minimum zugenommen hat
- t₅₀:: Zeit, bei der 50% des Umsatzes erreicht sind
- t₉₀:: Zeit, bei der 90% des Umsatzes erreicht sind

Die Mischungen werden 20 Minuten in der Presse bei 165°C vulkanisiert

An den Vulkanisaten werden folgende Prüfwerte bestimmt:

| Mischungs-Nr.: | 1* | 2* | 3* | 4* | 5* | 6* | 7* | 8* |
|---|---|---|---|---|---|---|---|---|
| Zugfestigkeit [Mpa] | 17,6 | 18,4 | 16,1 | 17,0 | 13,7 | 11,5 | 8,9 | 7,0 |
| Bruchdehnung [%] | 373 | 370 | 355 | 375 | 345 | 380 | 475 | 600 |
| Spannungswert/50% Dehnung [Mpa] | 1,8 | 1,8 | 1,6 | 1,6 | 1,4 | 0,9 | 0,7 | 0,6 |
| Spannungswert/100% Dehnung [Mpa] | 3,4 | 3,6 | 3,2 | 3,2 | 2,9 | 2,2 | 1,1 | 1,0 |
| Spannungswert/300% Dehnung [Mpa] | 13,2 | 13,8 | 12,8 | 12,5 | 11,3 | 8,0 | 4,2 | 2,5 |
| Härte Shore A, 23°C | 69 | 67 | 65 | 64 | 62 | 57 | 47 | 40 |
| Rückprallelastizität, 23°C [%] | 28 | 30 | 31 | 32 | 37 | 44 | 49 | 39 |
| Rückprallelastizität, 70°C [%] | 57 | 59 | 61 | 62 | 66 | 67 | 68 | 65 |
| DIN-Abrieb [mm3] | 90 | 90 | 90 | 95 | 105 | 150 | 220 | 335 |
| tan δ (0°C) | 0,486 | 0,514 | 0,548 | 0,534 | 0,536 | 0,501 | 0,290 | 0,356 |
| tan δ (23°C) | 0,240 | 0,226 | 0,213 | 0,203 | 0,171 | 0,146 | 0,130 | 0,192 |
| tan δ (60°C) | 0,102 | 0,096 | 0,090 | 0,087 | 0,072 | 0,060 | 0,065 | 0,088 |

Ergebnis: In der Mischungsserie A wird gezeigt, dass durch Substitution von jeweils 2, 6 und 10 phr Kieselsäure durch jeweils 1, 3 und 5 phr unmodifiziertes BR-Gel signifikante Vorteile im Nassrutschverhalten (tan d/0°C) und im Rollwiderstand (tan d/60°C) ohne signifikante Einbußen bei der Verarbeitbarkeit (Compoundviskosität) und im Abriebwiderstand zu erzielen sind.

### Mischungsserie B:

Folgende Bestandteile werden in der angegebenen Reihenfolge in einem Innenmischer bei 160°C gemischt (Mengenangaben in Gewichtsteilen)

| Mischungs-Nr.: | 1* | 2* | 3* | 4* | 5* | 6* | 7* | 8* |
|---|---|---|---|---|---|---|---|---|
| Buna VSL 5025¹⁾ | 103 | 103 | 103 | 103 | 103 | 103 | 103 | 103 |
| Buna CB 24 ²⁾ | 25 | 25 | 25 | 25 | 25 | 25 | 25 | 25 |
| Gel B (OBR 1046 A) | 0 | 1 | 3 | 5 | 10 | 20 | 30 | 40 |
| Renopal 450 ³⁾ | 12 | 12 | 12 | 12 | 12 | 12 | 12 | 12 |
| Vulkasil® S⁴⁾ | 80 | 78 | 74 | 70 | 60 | 40 | 20 | 0 |
| Silan Si 69^{®} 5) | 6,4 | 6,4 | 6,4 | 6,4 | 6,4 | 6,4 | 6,4 | 6,4 |
| Stearinsäure | 1 | 1 | 1 | 1 | 1 | 1 | 1 | 1 |
| TMQ ⁶⁾ | 1 | 1 | 1 | 1 | 1 | 1 | 1 | 1 |
| 6PPD⁷⁾ | 1 | 1 | 1 | 1 | 1 | 1 | 1 | 1 |
| Ozonschutzwachs⁸⁾ | 1 | 1 | 1 | 1 | 1 | 1 | 1 | 1 |

| | | | | | | | | |
|---|---|---|---|---|---|---|---|---|
| * Vergleich | | | | | | | | |

Folgende Compoundbestandteile werden in die auf 50°C abgekühlte Mischung auf der Walze eingemischt:

| | | | | | | | | |
|---|---|---|---|---|---|---|---|---|
| Zinkoxid | 2,5 | 2,5 | 2,5 | 2,5 | 2,5 | 2,5 | 2,5 | 2,5 |
| Schwefel | 1,5 | 1,5 | 1,5 | 1,5 | 1,5 | 1,5 | 1,5 | 1,5 |
| CBS⁹⁾ | 1,7 | 1,7 | 1,7 | 1,7 | 1,7 | 1,7 | 1,7 | 1,7 |
| DPG ¹⁰⁾ | 2 | 2 | 2 | 2 | 2 | 2 | 2 | 2 |

| | | | | | | | | |
|---|---|---|---|---|---|---|---|---|
| ¹⁾ Lösungs-Styrol/Butadienkautschuk der Bayer AG mit 37,5 phr Mineralöl (Vinylgehalt: 50 Gew.%; Styrolgehalt: 25 Gew.%) ²⁾ Neodym-Polybutadien (ölfrei) der Bayer AG ³⁾ Weichmacher der Fuchs Mineralölwerke ⁴⁾ Gefällte aktive Kieselsäure der Bayer AG ⁵⁾ Bis(tri-ethoxy-silyl-propyl) tetrasulfan (Si 69^{®} der Degussa AG) ⁶⁾ 2,2,4-Trimethyl-1,2-dihydrochinolin (polym.) Vulkanox® HS der Bayer AG ⁷⁾ N-1,3-Dimethylbutyl-N'-phenyl-p-phenylen-diamin (Vulkanox® 4020 der Bayer AG) ⁸⁾ Mischung von Paraffinen und Mikrowachsen (Antilux® 654 der Rheinchemie) ⁹⁾ Cyclohexylbenzthiazylsulfenamid (Vulkacit® CZ der Bayer AG) ¹⁰⁾ Diphenylguanidin (Vulkacit® D der Bayer AG) | | | | | | | | |

Zur Charakterisierung der Eigenschaften des unvernetzten Compounds werden die Mooneyviskosität ML 1+4 (100°C) und die Mooneyrelaxation (MR 30) herangezogen:

| Mischungs-Nr.: | 1* | 2* | 3* | 4* | 5* | 6* | 7* | 8* |
|---|---|---|---|---|---|---|---|---|
| ML 1 + 4 (100°C) [ME] | 111,3 | 107,5 | 104,8 | 89,0 | 82,7 | 60,4 | 46,9 | 31,7 |
| MR 30 [%] | 24,8 | 24,0 | 24,2 | 24,7 | 18,9 | 12,6 | 9,6 | 4,1 |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie Fₐ, Fₘₐₓ, Fₘₐₓ.-Fₐ-., ts₁, t₅₀ und t₉₀ bestimmt.

| Mischungs-Nr.: | 1* | 2* | 3* | 4* | 5* | 6* | 7* | 8* |
|---|---|---|---|---|---|---|---|---|
| Fₐ [dNm] | 5,0 | 5,1 | 4,6 | 4,3 | 3,3 | 2,1 | 1,4 | 0,9 |
| Fₘₐₓ [dNm] | 25,8 | 24,2 | 22,2 | 20,7 | 17,9 | 14,5 | 9,6 | 6,7 |
| Fₘₐₓ - Fₐ [dNm] | 20,8 | 19,1 | 17,6 | 16,4 | 14,6 | 12,4 | 8,2 | 5,8 |
| ts₁ [min.] | 0,6 | 0,9 | 0,9 | 1,3 | 1,5 | 1,9 | 2,2 | 2,3 |
| t₅₀ [min.] | 3,7 | 4,1 | 4,0 | 4,1 | 3,8 | 3,3 | 3,0 | 3,1 |
| t₉₀ [min] | 10,7 | 10,5 | 10,1 | 9,0 | 8,0 | 8,7 | 9,2 | 9,1 |

Nach DIN 53 529, Teil 3 bedeuten:
- Fₐ:: Vulkameteranzeige im Minimum der Vernetzungsisotherme
- Fₘₐₓ:: Maximum der Vulkameteranzeige
- Fₘₐₓ - Fₐ:: Differenz der Vulkameteranzeigen zwischen Maximum und Minimum
- ts₁:: Zeit, bei der die Vulkameteranzeige um 1 Nm gegenüber dem Minimum zugenommen hat
- t₅₀:: Zeit, bei der 50% des Umsatzes erreicht sind
- t₉₀:: Zeit, bei der 90% des Umsatzes erreicht sind

Die Mischungen werden 20 Minuten in der Presse bei 165°C vulkanisiert

An den Vulkanisaten werden folgende Prüfwerte bestimmt:

| Mischungs-Nr.: | 1* | 2* | 3* | 4* | 5* | 6* | 7* | 8* |
|---|---|---|---|---|---|---|---|---|
| Zugfestigkeit [MPa] | 17,6 | 17,7 | 17,5 | 15,3 | 14,2 | 10,1 | 6,6 | 5,1 |
| Bruchdehnung [%] | 373 | 375 | 380 | 345 | 370 | 370 | 435 | 540 |
| Spannungswert/50% Dehnung [MPa] | 1,8 | 1,8 | 1,6 | 1,6 | 1,4 | 1,1 | 0,7 | 0,6 |
| Spannungswert/100% Dehnung [MPa] | 3,4 | 3,4 | 3,2 | 3,1 | 2,7 | 2,0 | 1,1 | 0,9 |
| Spannungswert/300% Dehnung [MPa] | 13,2 | 13,0 | 12,7 | 12,4 | 10,3 | 7,3 | 3,5 | 2,1 |
| Härte Shore A, 23°C | 69 | 67 | 66 | 64 | 60 | 55 | 46 | 40 |
| Rückprallelastizität, 23°C [%] | 28 | 29 | 29 | 30 | 32 | 33 | 43 | 34 |
| Rückprallelastizität, 70°C [%] | 57 | 59 | 60 | 63 | 65 | 69 | 72 | 72 |
| DIN-Abrieb [mm3] | 90 | 80 | 70 | 80 | 90 | 130 | 225 | - |
| tan δ (0°C) | 0,486 | 0,488 | 0,511 | 0,514 | 0,526 | 0,480 | 0,312 | 0,358 |
| tan δ (23°C) | 0,240 | 0,229 | 0,222 | 0,212 | 0,201 | 0,211 | 0,191 | 0,248 |
| tan δ (60°C) | 0,102 | 0,0 8 | 0,089 | 0,082 | 0,070 | 0,057 | 0,065 | 0,070 |

Ergebnis: In der Mischungsserie B wird gezeigt, dass durch Substitution von jeweils 2, 6 und 10 phr Kieselsäure durch jeweils 1, 3 und 5 phr unmodifiziertes SBR-Gel signifikante Vorteile im Nassrutschverhalten (tan d/0°C) und im Rollwiderstand (tan d/60°C) ohne signifikante Einbußen bei der Verarbeitbarkeit (Compoundviskosität) und im Abriebwiderstand zu erzielen sind.

## Patentansprüche

1. Kautschukmischungen bestehend aus
a) Lösungs-Styrol/Butadien-Kautschuk (L-SBR), **dadurch gekennzeichnet, dass** sie neben L-SBR- Kautschuken Polybutadienkautschuk (BR) und Polyisoprenkautschuk (IR und NR) sowohl einzeln, als auch in Kombination unter einander enthalten, wobei der Anteil des Polybutadienkautschuks, der Anteil des Polyisoprenkautschuks oder der Anteil der Kombination aus Polybutadienkautschuk und Polyisoprenkautschuk in der Mischung 1 bis 50 Gew.-% beträgt, mit der Maßgabe, dass bei Einsatz der Kombination aus Polybutadienkautschuk und Polyisoprenkautschuk 5 bis 95 Gew.-% an Polybutadienkautschuk, bezogen auf die gesamte Menge der Kombination aus Polybutadienkautschuk und Polyisoprenkautschuk, vorhanden sind,
b) Kieselsäure,
c) Ruß und
d) Kautschukgel,
wobei die Komponente a) in einer Menge von 100 Gew.-Teilen, die Komponente b) in Mengen von 20 bis 120 Gew.-Teilen, die Komponente c) in Mengen von 5 bis 60 Gew.-Teilen und die Komponente d) in Mengen von 0,1 bis 10 Gew.-Teilen in der Mischung vorhanden sind, mit der Maßgabe, dass der Anteil der Komponente c) bezogen auf den Anteil der Komponente b) maximal 50 Gew.-% beträgt.

2. Kautschukmischungen nach Anspruch 1, **dadurch gekennzeichnet, dass** sie einen Füllstoffaktivator auf Basis von siliciumorganischen Schwefelverbindungen (Komponente e)) in Mengen von 0,1 bis 15 Gew.-Teilen enthalten.

3. Kautschukmischungen nach Anspruch 1, **dadurch gekennzeichnet, dass** sie die bekannten und üblichen Kautschukhilfsmittel und Additive sowie Vernetzungsmittel und Vulkanisationsbeschleuniger (Komponente g)) in Mengen von 0,05 bis 80 Gew.-Teilen enthalten.

4. Verfahren zur Herstellung der Kautschukmischungen nach Anspruch 1, **dadurch gekennzeichnet, dass** man die Mischungskomponenten bei Temperaturen im Bereich von 130 bis 180°C vermischt, ohne den Zusatz von solchen Mitteln, die die Vulkanisation initiieren können, und anschließend bei Temperaturen ≦ 100°C die Mittel der Mischung zumischt, die die Vulkanisation der Mischung initiieren.

5. Verwendung der Kautschukmischungen nach Anspruch 1 zur Herstellung von Reifen und Reifenbauteilen sowie zur Herstellung von technischen Gummiartikeln.

## Claims

1. Rubber mixture composed of
a) solution styrene/butadiene rubber (SSBR), **characterized in that** they comprise, alongside SSBR rubbers, polybutadiene rubber (BR) and polyisoprene rubber (IR and NR) either individually or else in combination, where the proportion of the polybutadiene rubber, the proportion of the polyisoprene rubber or the proportion of the combination of polybutadiene rubber and polyisoprene rubber in the mixture is from 1 to 50% by weight, with the proviso that when the combination of polybutadiene rubber and polyisoprene rubber is used the amount present of polybutadiene rubber, based on the total amount of the combination of polybutadiene rubber and polyisoprene rubber, is from 5 to 95% by weight,
b) silica,
c) carbon black and
d) rubber gel,
where the amounts present in the mixture are as follows: an amount of 100 parts by weight of component a), amounts of from 20 to 120 parts by weight of component b), amounts of from 5 to 60 parts by weight of component c) and amounts of from 0.1 to 10 parts by weight of component d), with the proviso that the proportion of component c), based on the proportion of component b), is at most 50% by weight.

2. Rubber mixtures according to Claim 1, **characterized in that** they comprise amounts of from 0.1 to 15 parts by weight of a filler activator based on organosilicon sulphur compounds (component e)).

3. Rubber mixtures according to Claim 1, **characterized in that** they comprise amounts of from 0.05 to 80 parts by weight of the known and conventional rubber auxiliaries and additives, and also crosslinking agents and vulcanization accelerators (component g)).

4. Process for producing the rubber mixtures according to Claim 1, **characterized in that** the mixture components are mixed at temperatures in the range from 130 to 180°C, without addition of means which can initiate vulcanization, and the means which initiate vulcanization of the mixture are then admixed at temperatures ≤ 100°C.

5. Use of the rubber mixtures according to Claim 1 for producing tyres and tyre components, and also for producing technical rubber items.

## Revendications

1. Mélanges de caoutchouc, constitués par
a) un caoutchouc de styrène/butadiène en solution (L-SBR), **caractérisés**
**en ce qu'**ils contiennent, outre les caoutchoucs L-SBR, du caoutchouc de polybutadiène (BR) et du caoutchouc de polyisoprène (IR et NR) tant seuls qu'en combinaison les uns avec les autres, la proportion de caoutchouc de polybutadiène, la proportion de caoutchouc de polyisoprène ou la proportion de la combinaison de caoutchouc de polybutadiène et de caoutchouc de polyisoprène dans le mélange représentant 1 à 50% en poids, à condition que dans le cas d'une utilisation de la combinaison de caoutchouc de polybutadiène et caoutchouc de polyisoprène, 5 à 95% en poids de caoutchouc de polybutadiène, par rapport à la quantité totale de combinaison de caoutchouc de polybutadiène et caoutchouc de polyisoprène, soient présents,
b) de la silice
c) de la suie et
d) du gel de caoutchouc,
le composant a) étant présent en une quantité de 100 parties en poids, le composant b) en des quantités de 20 à 120 parties en poids, le composant c) en des quantités de 5 à 60 parties en poids et le composant d) en des quantités de 0,1 à 10 parties en poids dans le mélange, à condition que la proportion de composant c) par rapport à la proportion de composant b) soit d'au maximum 50% en poids.

2. Mélanges de caoutchouc selon la revendication 1, **caractérisés en ce qu'**ils contiennent un activateur de charge à base de composés soufrés organosiliciés (composant e)) en des quantités de 0,1 à 15 parties en poids.

3. Mélanges de caoutchouc selon la revendication 1, **caractérisés en ce qu'**ils contiennent les adjuvants pour caoutchouc et les additifs ainsi que les réticulants et les accélérateurs de vulcanisation connus et usuels (composant g)) en des quantités de 0,05 à 80 parties en poids.

4. Procédé pour la préparation de mélanges de caoutchouc selon la revendication 1, **caractérisé en ce qu'**on mélange les composants de mélange à des températures dans la plage de 130 à 180°C, sans l'addition d'agents qui peuvent initier la vulcanisation, puis on ajoute en mélangeant au mélange à des températures ≤ 100°C les agents qui initient la vulcanisation.

5. Utilisation des mélanges de caoutchouc selon la revendication 1 pour la fabrication de pneus et d'éléments pour pneus ainsi que pour la fabrication d'objets techniques en caoutchouc.
